# EUROPEAN PATENT APPLICATION

(11) **EP 4 386 893 A1**
(43) Date of publication of application: **19.06.2024**
(21) Application number: 22855798.9
(22) Date of filing: 27.07.2022
(51) Int. Cl.: H01M 4/134, H01M 4/38, H01M 4/66, H01M 4/80, H01M 10/052, H01M 10/0568, H01M 10/0569

(54) **BATTERY**

(30) Priority: 10.08.2021 JP 2021130966
(71) Applicant: Panasonic Intellectual Property Management Co., Ltd., Kadoma-shi, Osaka 571-0057 (JP)
(72) Inventor: FUJIMOTO, Masahisa, Kadoma-shi, Osaka 571-0057 (JP); OTO, Takashi, Kadoma-shi, Osaka 571-0057 (JP)
(74) Representative: Novagraaf International SA
(86) International application number: PCT/JP2022/028978
(87) International publication number: WO 2023/017735

(57) **Abstract**

Battery (1000) according to the present disclosure includes first electrode (101), second electrode (103), and electrolyte solution (102). First electrode (101) includes a base material that is a porous body and an active material layer located on a surface of the base material. The active material layer contains an alloy containing Bi and Ni. The active material layer may contain an alloy containing Bi and Ni as a main component of the active material. In battery (1000), for example, first electrode (101) may be a negative electrode, and second electrode (103) may be a positive electrode.

## Description

### TECHNICAL FIELD

The present disclosure relates to a battery.

### BACKGROUND ART

In recent years, in lithium secondary batteries that have been actively researched and developed, battery characteristics such as charge-discharge voltages, charge-discharge cycle life characteristics, and storage characteristics largely depend on electrodes used therefor. Thus, attempts have been made to improve battery characteristics by improving electrode active material.

For example, lithium secondary batteries obtained by using, as an electrode, aluminum, silicon, tin, or the like that is electrochemically alloyed with lithium at the time of charging have been proposed for a long time. PTL 1 discloses a lithium secondary battery including: a negative electrode containing a negative electrode material made of an alloy containing silicon, tin, and a transition metal; a positive electrode; and an electrolyte.

PTL 2 discloses a lithium secondary battery including: a negative electrode obtained by using a silicon thin film provided as an active material on a current collector; a positive electrode; and an electrolyte.

Examples of the metal that is alloyed with lithium, bismuth (Bi). NPL 1 discloses a negative electrode which is prepared with the use of a Bi powder and contains Bi as a negative active material.

### Citation List

### Patent Literature

PTL 1: Japanese Patent No. 4898737
PTL 2: Japanese Patent No. 3733065

### Non-Patent Literature

NPL 1: Hiroyuki Yamaguchi, "Amorphous Polymeric Anode Materials from Poly(acrylic acid) and Metal Oxide for Lithium Ion Batteries", Mie University, Doctoral Dissertation, 2015

### SUMMARY OF THE INVENTION

The present disclosure provides a battery that has improved cycle characteristics.

A battery according to the present disclosure includes a first electrode, a second electrode, and an electrolyte solution, in which the first electrode includes a base material that is a porous body, and an active material layer located on a surface of the base material, and the active material layer contains an alloy containing Bi and Ni.

According to the present disclosure, a battery that has improved cycle characteristics can be provided.

### BRIEF DESCRIPTION OF THE DRAWINGS

Fig. 1 is a cross-sectional view schematically illustrating a configuration example of a battery according to an exemplary embodiment of the present disclosure.
Fig. 2 is a partially enlarged cross-sectional view schematically illustrating a configuration example of a first electrode in the battery according to the exemplary embodiment of the present disclosure.
Fig. 3 is a graph showing an example of an X-ray diffraction pattern of an active material layer composed of a BiNi thin film prepared on a nickel mesh.
Fig. 4A is a graph showing the result of an initial charge-discharge test of a test cell according to Example 1.
Fig. 4B is a graph showing the result of a second charge-discharge test of the test cell according to Example 1.
Fig. 5 is a graph showing an example of an X-ray diffraction pattern of an active material layer composed of a BiNi thin film prepared on a porous nickel.
Fig. 6A is a graph showing the result of an initial charge-discharge test of a test cell according to Example 2.
Fig. 6B is a graph showing the result of a second charge-discharge test of the test cell according to Example 2.
Fig. 7 is a graph showing a relationship between the number of cycles and the discharge capacity density for a test cell according to an example.
Fig. 8A is a graph showing the result of an initial charge-discharge test of a test cell according to Reference Example 1.
Fig. 8B is a graph showing the result of a second charge-discharge test of the test cell according to Reference Example 1.
Fig. 9 is a graph showing a relationship between the number of cycles up to 20 cycles and the discharge capacity density for the test cell according to Reference Example 1.
Fig. 10A is a graph showing the result of an initial charge-discharge test of a test cell according to Comparative Example 1.
Fig. 10B is a graph showing the result of a second charge-discharge test of the test cell according to Comparative Example 1.
Fig. 11 is a graph showing a relationship between the number of cycles up to 10 cycles and the discharge capacity density for the test cell according to Comparative Example 1.
Fig. 12 is a graph showing examples of X-ray diffraction patterns of a first electrode before charging, after charging, and after discharging the test cell according to Example 1.

### DESCRIPTION OF EMBODIMENT

### (Knowledge as basis of present disclosure)

As described in the section of [BACKGROUND ART], in lithium secondary batteries, attempts have been made to improve battery characteristics by improving electrode active materials.

When lithium metal is used as a negative active material, a lithium secondary battery that is high in energy density both per weight and per volume is obtained. In the lithium secondary battery that has such a configuration, however, lithium is deposited in a dendrite form at the time of charging. The deposited lithium metal partially reacts with an electrolyte solution, and thus, the battery has a problem of being low in charge-discharge efficiency low and poor in cycle characteristics.

To address the problem, the use of carbon, particularly, graphite as a negative electrode has been proposed. With a negative electrode obtained by using carbon, charging and discharging are performed by insertion and desorption of lithium into and from the carbon. The negative electrode that has such a configuration has, because of the charge-discharge mechanism, no lithium metal deposited in a dendrite form. In addition, a lithium secondary battery obtained by employing the negative electrode that has such a configuration involves a topotactic reaction, thus has very good reversibility, and has almost 100% charge-discharge efficiency. For these reasons, lithium secondary batteries obtained by employing negative electrodes obtained by using carbon, particularly, graphite, have been put into practical use. However, the theoretical capacity density of graphite is 372 mAh/g, which is about 1/10 of the theoretical capacity density 3,884 mAh/g of lithium metal. Accordingly, the capacity density of the active material of the negative electrode obtained by using graphite is low. Furthermore, the actual capacity density of graphite has reached almost the theoretical capacity density, and thus, the increase in the capacity of the negative electrode obtained by using graphite has reached a limit.

In contrast, lithium secondary batteries obtained by using, as an electrode, aluminum, silicon, tin, or the like that is electrochemically alloyed with lithium at the time of charging have been proposed for a long time. The capacity density of the metal that is alloyed with lithium is much higher than the capacity density of graphite. In particular, silicon has a high theoretical capacity density. Accordingly, electrodes obtained by using aluminum, silicon, tin, or the like that is alloyed with lithium are promising as negative electrodes for batteries that exhibit a high capacity, and various secondary batteries including such electrodes as negative electrodes have been proposed (PTL 1).

However, such negative electrodes obtained by using a metal that is alloyed with lithium as mentioned above are, however, expanded when the negative electrodes occlude lithium and contracted when the negative electrodes release lithium. When such expansion and contraction are repeated in charging and discharging, the alloy itself as an electrode active material is pulverized due to the charging and discharging, thereby deteriorating the current collecting characteristics of the negative electrodes, and thus failing to achieve sufficient cycle characteristics. For remedying such drawbacks, the following several attempts have been made. For example, attempts have been made to deposit silicon by a sputtering or vapor deposition method on a current collector that has a roughened surface, or to deposit tin thereon by electroplating (PTL 2). In this attempt, the active material, that is, the metal that is alloyed with lithium is made into a thin film in close contact with the current collector, and thus, even when the negative electrode is repeatedly expanded and contracted due to occlusion and release of lithium, the current collecting characteristics are hardly deteriorated.

However, when the active material is formed by the sputtering or vapor deposition method as mentioned above, however, the production cost is high, which is not practical. While it is practical to form the active material by electroplating at low production cost, electroplating with silicon is very difficult. In addition, tin with which electroplating is easily performed has a problem of having poor discharge flatness, thus making it difficult to use tin as an electrode of a battery.

In addition, examples of the metal that is alloyed with lithium includes bismuth (Bi). Bi forms, together with lithium (Li), compounds of LiBi and Li₃Bi. The potential of LiBi and the potential of Li₃Bi has almost no difference therebetween. In contrast, there are several compounds that are formed along with lithium by tin that has poor discharge flatness, and the potentials of the respective compounds are considerably different from each other. More specifically, unlike tin, Bi does not have the property that the potential is greatly different among multiple types of compounds formed by combination with lithium. For this reason, an electrode containing Bi as an active material has a flat potential and thus has excellent discharge flatness. Accordingly, an electrode containing Bi as an active material is considered suitable as an electrode of a battery.

However, Bi is poor in malleability and ductility, and is difficult to produce in the form of a metal sheet or a metal foil, and the obtainable form is a small ball or a powder. For this reason, an electrode that is produced by applying a Bi powder onto a current collector has been studied as an electrode containing Bi as an active material. However, such an electrode produced with the use of a Bi powder is pulverized due to repeated charging and discharging, thereby deteriorating the current collecting characteristics, and thus failing to achieve sufficient cycle characteristics. For example, in NPL 1, an electrode containing Bi as an active material is prepared with the use of a Bi powder and the use of a polyvinylidene fluoride (PVdF) or a polyimide (PI) as a binder. In NPL 1, a battery prepared with the use of this electrode is charged and discharged. However, the electrode prepared is very poor in both the results of initial charge-discharge curve and cycle characteristics. Although the measurement is performed at a very low rate that is equivalent to 0.042C, the initial charge-discharge efficiency is low and cycle degradation is severe. Thus, such a battery is not considered in practical use. As for the cycle degradation, NPL 1 states that the active material is considered finer as the Bi active material is expanded at the time of Li insertion and contracted at the time of Li desorption, thereby failing to secure an electron conduction path, and causing a decrease in capacity.

The present inventors have focused on Bi that does not have the property that the potential is greatly different among multiple types of compounds formed by combination with Li and has excellent discharge flatness as described above, and have intensively studied a battery capable of improving cycle characteristics. As a result, the present inventors have found a new technical idea that the cycle characteristics of a battery are improved when an alloy containing Bi and Ni is used as an active material, and have completed the present disclosure.

### (Overview of one aspect according to the present disclosure)

A battery according to a first aspect of the present disclosure includes a first electrode, a second electrode, and an electrolyte solution, in which the first electrode includes a base material that is a porous body, and an active material layer located on a surface of the base material, and the active material layer contains an alloy containing Bi and Ni.

The battery according to the first aspect includes the electrode including: the base material that is a porous body; and the active material layer which contains the alloy containing Bi and Ni as an active material and is located on the surface of the base material. Thus, the battery according to the first aspect has improved cycle characteristics.

In a second aspect of the present disclosure, for example, in the battery according to the first aspect, the active material layer may contain BiNi.

The battery according to the second aspect has a more enhanced capacity and improved cycle characteristics.

In a third aspect of the present disclosure, for example, in the battery according to the second aspect, the BiNi may have a crystal structure having a space group which belongs to C2/m.

The battery according to the third aspect has a more enhanced capacity and improved cycle characteristics.

In a fourth aspect of the present disclosure, for example, in the battery according to the second or third aspect, the active material layer may contain the BiNi as a main component of an active material.

The battery according to the fourth aspect has a more enhanced capacity and improved cycle characteristics.

In a fifth aspect of the present disclosure, for example, in the battery according to any one of the second to fourth aspects, the active material layer may contain substantially only the BiNi as an active material.

The battery according to the fifth aspect has a more enhanced capacity and improved cycle characteristics.

In a sixth aspect of the present disclosure, for example, in the battery according to any one of the first to fifth aspects, the active material layer may contain at least one selected from the group consisting of LiBi and Li₃Bi.

The battery according to the sixth aspect has a more enhanced capacity and improved cycle characteristics.

In a seventh aspect of the present disclosure, for example, in the battery according to any one of the first to sixth aspects, the active material layer may contain no solid electrolyte.

The battery according to the seventh aspect has a more enhanced capacity and improved cycle characteristics.

In an eighth aspect of the present disclosure, for example, in the battery according to any one of the first to seventh aspects, the base material may contain Ni.

The battery according to the eighth aspect has a more enhanced capacity and improved cycle characteristics.

In a ninth aspect of the present disclosure, for example, in the battery according to any one of the first to eighth aspects, the active material layer may be a heat-treated plating layer.

The battery according to the ninth aspect has a more enhanced capacity and improved cycle characteristics.

In a tenth aspect of the present disclosure, for example, in the battery according to any one of the first to ninth aspects, the electrolyte solution may contain an aprotic solvent and a lithium salt dissolved in the aprotic solvent.

The battery according to the tenth aspect can achieve a lithium ion battery that has an enhanced capacity and improved cycle characteristics.

In an eleventh aspect of the present disclosure, for example, in the battery according to the tenth aspect, the aprotic solvent may contain a vinylene carbonate.

The battery according to the eleventh aspect has a more enhanced capacity and improved cycle characteristics.

In a twelfth aspect of the present disclosure, for example, in the battery according to any one of the first to eleventh aspects, the first electrode may be a negative electrode, and the second electrode may be a positive electrode.

The battery according to the twelfth aspect has a more enhanced capacity and improved cycle characteristics.

### (Exemplary embodiment of the present disclosure)

Hereinafter, an exemplary embodiment of the present disclosure will be described with reference to the drawings. The following description is intended to provide a comprehensive or specific example. The numerical values, compositions, shapes, film thicknesses, and electrical characteristics, the structures of secondary batteries, and the like, shown below, are considered by way of examples, and are not intended to limit the present disclosure.

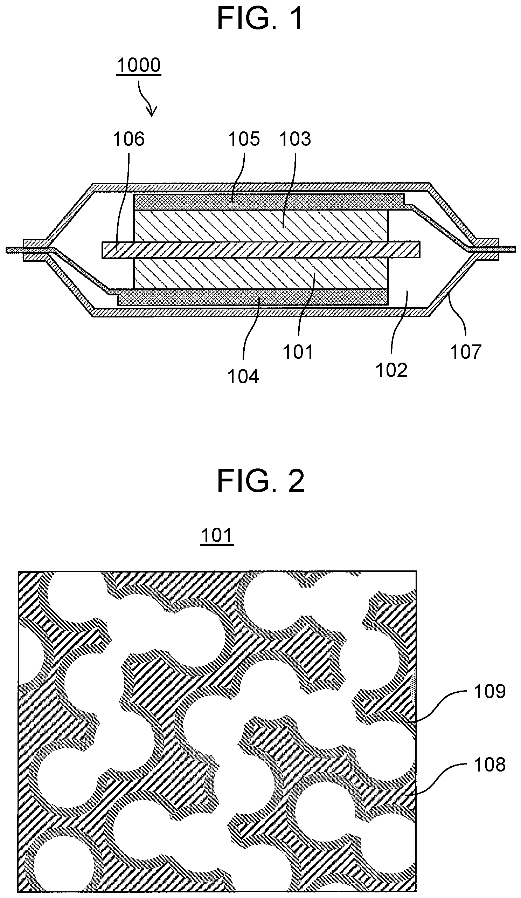

Fig. 1 is a cross-sectional view schematically illustrating a configuration example of battery 1000 according to an exemplary embodiment of the present disclosure.

Battery 1000 includes first electrode 101, second electrode 103, and electrolyte solution 102. Fig. 2 is a partially enlarged cross-sectional view schematically illustrating a configuration example of first electrode 101 in battery 1000 according to the exemplary embodiment of the present disclosure. As shown in Fig. 2, first electrode 101 includes base material 108 that is a porous body, and active material layer 109 located on a surface of base material 108. Active material layer 109 contains an alloy containing Bi and Ni. Active material layer 109 contains, for example, BiNi as the alloy containing Bi and Ni.

When active material layer 109 contains BiNi, the BiNi may have, for example, a monoclinic crystal structure having a space group which belongs to C2/m.

As shown in Fig. 1, battery 1000 according to the present exemplary embodiment may further include, for example, first current collector 104 in contact with first electrode 101. In addition, battery 1000 according to the present exemplary embodiment may further include, for example, second current collector 105 in contact with second electrode 103. Providing first electrode 101 and second current collector 105 allows electricity to be extracted from battery 1000 with a high efficiency.

Battery 1000 further includes, for example, separator 106 and exterior 107. Separator 106 is disposed between first electrode 101 and second electrode 103. First electrode 101 and second electrode 103 face each other in such a way that separator 106 is provided therebetween. First electrode 101, second electrode 103, separator 106, and electrolyte solution 102 are housed in exterior 107. Electrolyte solution 102 is, for example, an electrolyte solution with which first electrode 101, second electrode 103, and separator 106 are impregnated. The internal space of exterior 107 may be filled with electrolyte solution 102.

In battery 1000, active material layer 109 contains an alloy containing Bi and Ni as an active material. The use of the alloy containing Bi and Ni as an active material solves the problems of: pulverization of a Bi active material formed with the use of a Bi powder in charging and discharging; and side reactions of the Bi active material with an electrolyte solution. Accordingly, decrease in an electron conduction path in active material layer 109 due to repeated charging and discharging is suppressed. Thus, battery 1000 has improved cycle characteristics.

In addition, in battery 1000, in first electrode 101, active material layer 109 containing the alloy containing Bi and Ni is formed on the surface of base material 108 that is a porous body. Active material layer 109 is also formed on the inner walls of pores of base material 108, for example, as shown in Fig. 2. For this reason, in battery 1000, regarding the area where the active material can be brought into contact with the electrolyte solution, the area of active material layer 109 is larger when active material layer 109 is formed on the surface of base material 108 that is a porous body than on the surface of a foil-shaped base material. Accordingly, the capacity of battery 1000 according to the present exemplary embodiment is improved.

Further, in first electrode 101 shown in Fig. 2, active material layer 109 is formed in a thin-film shape on the inner walls of the pores of base material 108 in a state where the holes are present at a relatively high porosity. First electrode 101 is, however, not limited to this configuration. First electrode 101 may be configured such that, for example, active material layer 109 substantially fills the inside of the holes of base material 108 to decrease the porosity. Even when first electrode 101 has such a structure, the boundary between base material 108 and active material layer 109 can be clearly confirmed, and in first electrode 101, base material 108 is a porous body, and active material layer 109 can be considered formed on the surface of base material 108. Active material layer 109 may be formed on some or substantially all of the inner walls of the multiple holes.

Battery 1000 is, for example, a lithium secondary battery. Hereinafter, a case where metal ions occluded and released in active material layer 109 of first electrode 101 and second electrode 103 at the time of charging and discharging battery 1000 are lithium ions will be described as an example.

Base material 108 is a porous body as described above. In the present specification, the porous body means a structure including multiple pores including open pores opened to the outside. Examples of the porous body in the present specification include a mesh and a porous structure. The porous structure is a structure composed of a porous material provided with multiple pores, and the sizes of the pores are not particularly limited. Examples of the porous structure include foams. In addition, the porous structure may be a three-dimensional network structure in which pores communicate with each other. Further, in the present specification, the "pore" encompasses, for example, both a pore of which the inside is filled with, for example, the active material layer and a pore of which the inside is not filled with the active material layer. More specifically, the pore of which the inside is filled with, for example, the active material layer is also regarded as a "pore".

Base material 108 has, for example, conductivity. Base material 108 may be formed of a conductive material such as metal, or may be a conductive film made of a conductive material, provided on the surface of a porous body (for example, a foamed resin) made of a non-conductive material such as a resin, for example. Base material 108 may be, for example, a metal mesh and a porous metal. Base material 108 can function as a current collector for first electrode 101. More specifically, when first current collector 104 is provided, for example, first current collector 104 and base material 108 function as a current collector for first electrode 101. When first current collector 104 is not provided, for example, base material 108 functions as a current collector for first electrode 101.

Base material 108 may contain, for example, Ni. Base material 108 may be, for example, nickel mesh or porous nickel.

As described above, active material layer 109 contains, for example, BiNi as the alloy containing Bi and Ni. Active material layer 109 may contain BiNi as a main component. In this regard, "active material layer 109 contains BiNi as a main component" is defined as "the content ratio of BiNi in active material layer 109 is more than or equal to 50% by mass". Further, the content ratio of BiNi in active material layer 109 can be determined, for example, by confirming that Bi and Ni are contained in active material layer 109 from elemental analysis by energy dispersive X-ray analysis (EDX), and calculating the proportions of the contained compounds from Rietveld analysis on the X-ray diffraction result of active material layer 109.

With the above-described configuration, improved charge-discharge cycle characteristics can be obtained.

Active material layer 109 containing the BiNi as a main component may be composed of, for example, BiNi formed in a thin-film shape (hereinafter, referred to as a "BiNi thin film").

Active material layer 109 composed of the BiNi thin film can be prepared, for example, by electroplating. A method for producing first electrode 101 by preparing active material layer 109 by electroplating is, for example, as follows.

First, a base material for electroplating is prepared. For example, a porous body that can constitute base material 108 when first electrode 101 is formed is used as the base material for electroplating. For example, a metal mesh or a porous metal is used as the base material for electroplating. For example, nickel mesh or porous nickel may be used as the base material for electroplating. The structure of the porous body for use as the base material for electroplating is not particularly limited as long as the porous body can constitute base material 108 when the first electrode is formed through processes such as electroplating and pressurization treatment, and thus the porous body can be selected appropriately depending on the intended structure of first electrode 101. As an example, the porous body for use as a base material for electroplating may have a specific surface area, for example, from 0.014 m²/cm³ to 0.036 m²/cm³ inclusive.

As an example, a nickel mesh is prepared as the base material for electroplating. The nickel mesh is subjected to preliminary degreasing with an organic solvent, and then immersed in an acidic solvent to perform degreasing, thereby activating the surface of the nickel mesh. The activated nickel mesh is connected to a power source so as to allow a current to be applied to the nickel mesh. The nickel mesh connected to the power source is immersed in a bismuth plating bath. As the bismuth plating bath, for example, an organic acid bath containing Bi³⁺ ions and an organic acid is used. Thereafter, the surface of the nickel mesh is electroplated with Bi by applying a current to the nickel mesh under the control of the current density and the application time. After the electroplating, the nickel mesh is recovered from the plating bath, and after removing the masking, washed with pure water and dried. By these methods, a Bi plating layer is prepared on the surface of the nickel mesh. Further, the bismuth plating bath for use in preparing the Bi plating layer is not particularly limited, and can be selected appropriately from known bismuth plating baths capable of depositing a Bi simple substance thin film. For the bismuth plating bath, an organic sulfonic acid bath, a gluconic acid and ethylenediaminetetraacetic acid (EDTA) bath, or a citric acid and EDTA bath can be used as the organic acid bath. For example, a sulfuric acid bath may be used for the bismuth plating bath. In addition, an additive may be added to the bismuth plating bath.

Even when, for example, porous nickel is used as the base material for electroplating, a Bi plating layer can be prepared by the same method as mentioned above.

In this regard, Table 1 shows the mass of Bi plating prepared by the above-described method in the case of using a nickel foil, a nickel mesh, and porous nickel as the base material for electroplating. When a nickel foil was used as the base material for electroplating, the nickel foil was subjected to preliminary degreasing with an organic solvent, and then, one side of the foil was masked, and the nickel foil was immersed in an acidic solvent to perform degreasing, thereby activating the surface of the nickel foil. Then, the nickel foil was immersed in a bismuth plating bath to electroplate the surface of the unmasked nickel foil with Bi.

**[Table 1]**

| | Nickel foil | Nickel mesh | Porous nickel |
|---|---|---|---|
| Size (vertical × horizontal) | 10 cm × 10 cm | 10 cm × 10 cm | 10 cm × 10 cm |
| Thickness | 10 µm | 50 µm | 1600 µm |
| Plating mass | 0.512 g | 1.032 g | 0.526 g |
| Note | Manufactured by Nilaco Corporation Ni/foil NI-313173 | Manufactured by Nilaco Corporation Ni/Wire mesh NI-318200 | Manufactured by Nilaco Corporation Ni/Porous body NI-318161 |

Next, the nickel mesh and the Bi plating layer prepared on the nickel mesh are heated. This heat treatment can diffuse Ni in solid phase from the nickel mesh as a base material to the Bi plating layer to prepare an active material layer composed of a BiNi thin film. Here, a sample of the nickel mesh electroplated with Bi is subjected to the heat treatment, for example, at a temperature of higher than or equal to 250°C for longer than or equal to 30 minutes and shorter than 100 hours in a non-oxidizing atmosphere, thereby making it possible to diffuse Ni in solid phase from the nickel mesh to the Bi plating layer to prepare an active material layer composed of a BiNi thin film.

The above-mentioned sample of the nickel mesh electroplated with Bi was subjected to the heat treatment at a temperature of 400°C for 60 hours in an argon atmosphere to prepare an active material layer composed of a BiNi thin film.

In addition, the structure of the surface of the active material layer composed of the BiNi thin film on the nickel mesh was also analyzed by the surface X-ray diffraction measurement.

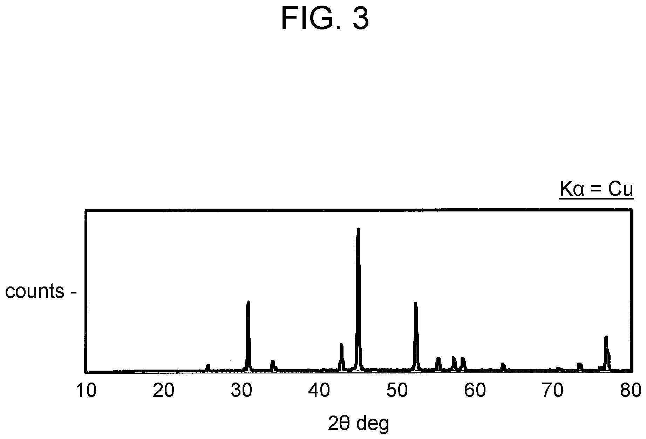

Fig. 3 is a graph showing an example of an X-ray diffraction pattern of the active material layer composed of the BiNi thin film prepared on the nickel mesh. The X-ray diffraction pattern was measured by a Θ-2Θ method with the use of Cu-Kα rays of 1.5405 Å and 1.5444 Å in wavelength as X-rays from the surface of the active material layer, that is, in the thickness direction of active material layer, by use of an X-ray diffractometer (MiNi Flex, manufactured by Rigaku Corporation). Phases of: BiNi having a space group which belongs to C2/m as a crystal structure; and Ni contained in the nickel mesh as a base material and the active material layer were identified from the X-ray diffraction pattern shown in Fig. 3.

Similarly, as for BiNi formed when a porous body such as porous nickel is used as a base material, BiNi having a space group which belongs to C2/m can be synthesized by electroplating and heat treatment. More specifically, in battery 1000 according to the present exemplary embodiment, active material layer 109 containing the BiNi included in first electrode 101 may be, for example, a heat-treated plating layer prepared as described above. Furthermore, in battery 1000 according to the present exemplary embodiment, the BiNi included in active material layer 109 of first electrode 101 has, for example, a crystal structure of which the space group belongs to C2/m.

Hereinafter, each configuration of battery 1000 according to the present exemplary embodiment will be described in more detail by exemplifying a case where first electrode 101 is a negative electrode, whereas second electrode 103 is a positive electrode.

### [First electrode]

As described above, first electrode 101 includes base material 108 that is a porous body and active material layer 109 located on the surface of base material 108. The configurations of base material 108 and active material layer 109 are as described above.

First electrode 101 functions as a negative electrode. Accordingly, active material layer 109 contains a negative active material that has the property of occluding and releasing lithium ions. Active material layer 109 contains the alloy containing Bi and Ni, and the alloy containing Bi and Ni functions as a negative active material. Active material layer 109 contains, for example, BiNi as the active material. The BiNi in active material layer 109 has, for example, a crystal structure of which a space group belongs to C2/m.

Bi is a metal element that is alloyed with lithium. In contrast, because Ni is not alloyed with lithium, in the case of an alloy containing Ni, the load on the crystal structure of the negative active material is presumed to be decreased at the time of desorption and insertion of lithium atoms associated with charging and discharging, thereby keeping the residual capacity ratio of the battery from being decreased. When the BiNi functions as a negative active material, Bi forms an alloy with lithium at the time of charging, thereby occluding lithium therein. More specifically, in active material layer 109, a lithium bismuth alloy is produced at the time of charging battery 1000. The lithium bismuth alloy to be produced contains, for example, at least one selected from the group consisting of LiBi and Li₃Bi. More specifically, at the time of charging battery 1000, active material layer 109 contains, for example, at least one selected from the group consisting of LiBi and Li₃Bi. At the time of discharging battery 1000, lithium is released from the lithium bismuth alloy, thereby causing the lithium bismuth alloy to return to BiNi.

The BiNi as a negative active material reacts, for example, as follows at the time of charging and discharging battery 1000. It is to be noted that the following reaction is an example in a case where the lithium bismuth alloy produced at the time of charging is Li₃Bi.
Charge: BiNi + 3Li⁺ + 3e⁻ → Li₃Bi + Ni
Discharge: Li₃Bi + Ni → BiNi + 3Li⁺ + 3e⁻

Active material layer 109 may contain substantially only the BiNi as an active material. In this case, battery 1000 can have an enhanced capacity and improved cycle characteristics. It is to be noted that "active material layer 109 contains substantially only the BiNi as an active material" means that, for example, in the active material included in active material layer 109, the other active material than the BiNi is less than or equal to 1% by mass. Active material layer 109 may contain only the BiNi as an active material.

Active material layer 109 may contain no solid electrolyte.

Active material layer 109 may be disposed in direct contact with the surface of base material 108. Furthermore, when battery 1000 includes first current collector 104, base material 108 may be disposed in contact with first current collector 104.

Active material layer 109 may have a thin-film shape.

Active material layer 109 may be a heat-treated plating layer. Active material layer 109 may be a heat-treated plating layer provided in direct contact with the surface of base material 108. More specifically, active material layer 109 may be a layer formed by heat-treating the Bi plating layer formed on the surface of base material 108 containing Ni as described above.

When active material layer 109 is a heat-treated plating layer provided in direct contact with the surface of base material 108, active material layer 109 has firm close contact with current base material 108. This makes it possible to further suppress deterioration of the current collecting characteristics of first electrode 101, which is caused when active material layer 109 repeatedly expanded and contracted. Accordingly, the charge-discharge characteristics of battery 1000 are further improved. Furthermore, when active material layer 109 is a heat-treated plating layer, Bi to be alloyed with lithium is contained at a high density in active material layer 109, thus also allowing a higher capacity to be achieved.

Active material layer 109 may contain other materials than the alloy containing Bi and Ni.

Active material layer 109 may further contain a conductive material.

Examples of the conductive material include carbon materials, metals, inorganic compounds, and conductive polymers. Examples of the carbon materials include graphite, acetylene black, carbon black, Ketjen black, carbon whiskers, needle coke, and carbon fibers. Examples of the graphite include natural graphite and artificial graphite. Examples of the natural graphite include massive graphite and scaly graphite. Examples of the metals include copper, nickel, aluminum, silver, and gold. Examples of the inorganic compounds include a tungsten carbide, a titanium carbide, a tantalum carbide, a molybdenum carbide, a titanium boride, and a titanium nitride. These materials may be used alone, or two or more thereof may be used in mixture.

Active material layer 109 may further contain a binder.

Examples of the binder include fluorine-containing resins, thermoplastic resins, ethylene propylene diene monomer (EPDM) rubbers, sulfonated EPDM rubbers, and natural butyl rubbers (NBR). Examples of the fluorine-containing resins include polytetrafluoroethylene (PTFE), polyvinylidene fluoride (PVdF), and fluoro-rubber. Examples of the thermoplastic resins include polypropylene and polyethylene. These materials may be used alone, or two or more thereof may be used in mixture.

The thickness of active material layer 109 is not particularly limited, and may be, for example, from 0.1 µm to 100 µm inclusive.

The material of base material 108 is, for example, a single metal or an alloy. More specifically, the material may be a single metal or an alloy containing at least one selected from the group consisting of copper, chromium, nickel, titanium, platinum, gold, aluminum, tungsten, iron, and molybdenum. Base material 108 may be stainless steel.

Base material 108 may contain nickel (Ni).

The structure of base material 108 is as described above. Base material 108 may be regarded as a current collector for first electrode 101 or a part of the current collector.

The thickness of first electrode 101 may be from 10 µm to 2000 µm inclusive. More specifically, the total thickness of base material 108 that is a porous body, on the surface of which active material layer 109 is provided, may be from 10 µm to 2000 µm inclusive. First electrode 101 has such a thickness, and the battery can thereby operate with high output power.

### [First current collector]

In battery 1000 according to the present exemplary embodiment, first current collector 104 may be provided, or may not be provided. First current collector 104 is provided, for example, in contact with first electrode 101. First current collector 104 is provided, for example, in contact with base material 108 for first electrode 101. Providing first current collector 104 allows electricity to be extracted from battery 1000 with a high efficiency.

The material of first current collector 104 is, for example, a single metal or an alloy. More specifically, the material may be a single metal or an alloy containing at least one selected from the group consisting of copper, chromium, nickel, titanium, platinum, gold, aluminum, tungsten, iron, and molybdenum. First current collector 104 may be stainless steel.

First current collector 104 may contain nickel (Ni).

First current collector 104 may have a plate shape or a foil shape. From the viewpoint of easily securing high conductivity, first current collector 104 may be a metal foil. The thickness of first current collector 104 may be, for example, from 5 µm to 20 µm inclusive.

First current collector 104 may be a layered film.

### [Electrolyte solution]

Electrolyte solution 102 contains, for example, an aprotic solvent and a lithium salt dissolved in the aprotic solvent.

The aprotic solvent is not particularly limited. Examples of the aprotic solvent include cyclic carbonate ester solvents, chain carbonate ester solvents, cyclic ether solvents, chain ether solvents, cyclic ester solvents, chain ester solvents, and fluorine solvents. Examples of the cyclic carbonate ester solvents include a vinylene carbonate, a fluoroethylene carbonate, an ethylene carbonate, a propylene carbonate, and a butylene carbonate. Examples of the chain carbonate ester solvents include a dimethyl carbonate, an ethyl methyl carbonate, and a diethyl carbonate. Examples of the cyclic ether solvents include tetrahydrofuran, 2-methyltetrahydrofuran, 1,4-dioxane, and 1,3-dioxolane. Examples of the chain ether solvents include 1,2-dimethoxyethane and 1,2-diethoxyethane. Examples of the cyclic ester solvents include γ-butyrolactone. Examples of the chain ester solvents include a methyl acetate. Examples of the fluorine solvents include a methyl fluoropropionate, fluorobenzene, a fluoroethyl methyl carbonate, and a fluorodimethylene carbonate. Electrolyte solution 102 may contain one type of solvent selected from these solvents, or may contain a mixture of two or more types of non-aqueous solvents selected from these solvents.

Electrolyte solution 102 may contain, as the aprotic solvent, at least one selected from the group consisting of a vinylene carbonate, 2-methyltetrahydrofuran, a fluoroethylene carbonate, and an ethylene carbonate. Electrolyte solution 102 contains these solvents, and battery 1000 thereby has more improved cycle characteristics.

Electrolyte solution 102 may contain a vinylene carbonate as the aprotic solvent. Electrolyte solution 102 contains a vinylene carbonate, and thereby battery 1000 has more improved cycle characteristics.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One type of lithium salt selected from these lithium salts may be used alone. Alternatively, a mixture of two or more types of lithium salts selected from these lithium salts may be used.

### [Second electrode]

Second electrode 103 functions as a positive electrode. Second electrode 103 contains a material capable of occluding and releasing metal ions such as lithium ions. The material is, for example, a positive active material.

Second electrode 103 contains a positive active material.

Second electrode 103 may be disposed in direct contact with current collector 105 on the surface of current collector 105.

As the positive active material, for example, a lithium-containing transition metal oxide, a transition metal fluoride, a polyanion material, a fluorinated polyanion material, a transition metal sulfide, a transition metal oxysulfide, or a transition metal oxynitride can be used. Examples of the lithium-containing transition metal oxide include LiNi_{1-x-y}CoₓAl_{y}O₂((x + y) < 1), LiNi_{1-x-y}CoₓMn_{y}O₂((x + y) < 1), and LiCoO₂. In particular, when the lithium-containing transition metal oxide is used as the positive active material, the production cost of the electrode can be decreased, and the average discharge voltage of the battery can be increased. The positive active material may contain, for example, Li(Ni,Co,Mn)O₂.

Second electrode 103 may contain a solid electrolyte. As the solid electrolyte, a known solid electrolyte for use in a lithium secondary battery can be used. For example, a halide solid electrolyte, a sulfide solid electrolyte, an oxide solid electrolyte, a polymer solid electrolyte, or a complex hydride solid electrolyte may be used.

The halide solid electrolyte means a solid electrolyte containing a halogen element. The halide solid electrolyte may contain not only a halogen element but also oxygen. The halide solid electrolyte contains no sulfur (S).

The halide solid electrolyte may be, for example, a material represented by the following compositional formula (1).

Li_{α}M_{β}X_{γ} ... Formula (1)

where α, β, and γ are values larger than 0, M is at least one selected from the group consisting of metal elements other than Li and metalloid elements, and X is at least one selected from the group consisting of F, Cl, Br, and I.

The "metalloid element" is B, Si, Ge, As, Sb, and Te.

The "metal element" refers to all elements included in Groups 1 to 12 of the periodic table, excluding hydrogen, and all elements included in Groups 13 to 16, excluding B, Si, Ge, As, Sb, Te, C, N, P, O, S, and Se. In other words, the metal element is an element group that can serve as a cation when the element is combined with a halogen compound to form an inorganic compound.

In the compositional formula (1), M may contain Y, and X may contain Cl and Br.

The sulfide solid electrolyte means a solid electrolyte containing sulfur (S). The sulfide solid electrolyte may contain not only sulfur but also a halogen element.

As the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used.

As the oxide solid electrolyte, for example, a NASICON-type solid electrolyte typified by LiTi₂(PO₄)₃ and an element-substituted compound thereof, a (LaLi)TiO₃-based perovskite-type solid electrolyte, a LISICON-type solid electrolyte typified by Li₁₄ZnGe₄O₁₆, Li₄SiO₄, LiGeO₄ and an element-substituted compound thereof, a garnet-type solid electrolyte typified by Li₇La₃Zr₂O₁₂ and an element-substituted compound thereof, Li₃PO₄ and an N-substituted compound thereof, and glass or glass ceramics in which Li₂SO₄, Li₂CO₃, or the like is added to a Li-B-O compound such as LiBO₂ and Li₃BO₃ as a base can be used.

As the polymer solid electrolyte, for example, a compound of a polymer compound and a lithium salt can be used. The polymer compound may have an ethylene oxide structure. The polymer compound that has an ethylene oxide structure can contain a large amount of lithium salt. For this reason, the ionic conductivity can be increased. As the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, and the like can be used. One type of lithium salt selected from the exemplified lithium salts can be used alone. Alternatively, a mixture of two or more types of lithium salts selected from the exemplified lithium salts can be used.

As the complex hydride solid electrolyte, for example, LiBH₄-LiI, LiBH₄-P₂S₅, and the like can be used.

The positive active material may have a median diameter of from 0.1 µm to 100 µm inclusive. When the positive active material has a median diameter of more than or equal to 0.1 µm, the positive active material and the solid electrolyte can form a good dispersion state. This improves the charge-discharge characteristics of the battery. When the positive active material has a median diameter of less than or equal to 100 µm, the lithium diffusion rate is improved. Thus, the battery can operate with high output power.

The positive active material may have a larger median diameter than the solid electrolyte. Thus, the positive active material and the solid electrolyte can form a good dispersion state.

From the viewpoint of the energy density and output power of the battery, in second electrode 103, the ratio of the volume of the positive active material to the total volume of the positive active material and the solid electrolyte may be from 0.30 to 0.95 inclusive.

For preventing the solid electrolyte from reacting with the positive active material, a coating layer may be formed on the surface of the positive active material. Thus, the reaction overvoltage of the battery can be kept from being increased. Examples of the coating material included in the coating layer include sulfide solid electrolytes, oxide solid electrolytes, and halide solid electrolytes.

The thickness of second electrode 103 may be from 10 µm to 500 µm inclusive. When the thickness of second electrode 103 is more than or equal to 10 µm, the battery can ensure a sufficient energy density. When the thickness of second electrode 103 is less than or equal to 500 µm, the battery can operate with high output power.

Second electrode 103 may contain a conductive material for the purpose of enhancing the electron conductivity.

Second electrode 103 may contain a binder.

The same materials as the materials that can be used for first electrode 101 may be used as the conductive material and the binder.

Second electrode 103 may contain a non-aqueous electrolyte solution, a gel electrolyte, or an ionic liquid for the purpose of facilitating transfer of lithium ions to improve the output characteristics of the battery.

The non-aqueous electrolyte solution contains a non-aqueous solvent, and a lithium salt dissolved in the non-aqueous solvent. Examples of the non-aqueous solvent include cyclic carbonate ester solvents, chain carbonate ester solvents, cyclic ether solvents, chain ether solvents, cyclic ester solvents, chain ester solvents, and fluorine solvents. Examples of the cyclic carbonate ester solvents include an ethylene carbonate, a propylene carbonate, and a butylene carbonate. Examples of the chain carbonate ester solvents include a dimethyl carbonate, an ethyl methyl carbonate, and a diethyl carbonate. Examples of the cyclic ether solvents include tetrahydrofuran, 1,4-dioxane, and 1,3-dioxolane. Examples of the chain ether solvents include 1,2-dimethoxyethane and 1,2-diethoxyethane. Examples of the cyclic ester solvents include γ-butyrolactone. Examples of the chain ester solvents include a methyl acetate. Examples of the fluorine solvents include a fluoroethylene carbonate, a methyl fluoropropionate, fluorobenzene, a fluoroethyl methyl carbonate, and a fluorodimethylene carbonate. One type of non-aqueous solvent selected from these solvents may be used alone. Alternatively, a mixture of two or more types of non-aqueous solvents selected from these solvents may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One type of lithium salt selected from these lithium salts may be used alone. Alternatively, a mixture of two or more types of lithium salts selected from these lithium salts may be used. The concentration of the lithium salt ranges, for example, from 0.5 mol/liter to 2 mol/liter inclusive.

As the gel electrolyte, a polymer material impregnated with a non-aqueous electrolyte solution can be used. Examples of the polymer material include a polyethylene oxide, a polyacrylonitrile, a polyvinylidene fluoride, a polymethyl methacrylate, and polymers having an ethylene oxide bond.

Examples of the cation included in the ionic liquid include: (i) aliphatic chain quaternary salts such as tetraalkyl ammonium or tetraalkyl phosphonium; (ii) aliphatic cyclic ammoniums such as a pyrrolidinium, a morpholinium, an imidazolinium, a tetrahydropyrimidinium, a piperazinium, or a piperidinium; and (iii) nitrogen-containing heterocyclic aromatic cations such as a pyridinium or an imidazolium.

Examples of the anion included in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

### [Second current collector]

In battery 1000 according to the present exemplary embodiment, second current collector 105 may be provided, or may not be provided. Second current collector 105 is provided, for example, in contact with second electrode 103. Second current collector 105 is provided to allow electricity to be extracted from battery 1000 with a high efficiency.

The material of second current collector 105 is, for example, a single metal or an alloy. More specifically, the material may be a single metal or an alloy containing at least one selected from the group consisting of copper, chromium, nickel, titanium, platinum, gold, aluminum, tungsten, iron, and molybdenum. Second current collector 105 may be stainless steel.

Second current collector 105 may contain nickel (Ni).

Second current collector 105 may have a plate shape or a foil shape. From the viewpoint of easily securing high conductivity, second current collector 105 may be a metal foil. The thickness of second current collector 105 may be, for example, from 5 µm to 20 µm inclusive.

### [Separator]

Separator 106 has lithium ion conductivity. The material of separator 106 is not particularly limited as long as lithium ions are allowed to pass through the material. The material of separator 106 can be at least one selected from the group consisting of solid electrolytes, gel electrolytes, ion exchange resin membranes such as a lithium cation exchange resin, semipermeable membranes, and porous membranes. When separator 106 is made of these materials, the safety of battery 1000 can be sufficiently ensured. Examples of the solid electrolytes include sulfide solid electrolytes such as Li₂S-P₂S₅, and oxide solid electrolytes such as Li₇La₃Zr₂O₁₂ (LLZ). Examples of the gel electrolytes include gel electrolytes containing a fluororesin such as PVdF. Examples of the ion exchange resin membranes include cation exchange membranes and anion exchange membranes. Examples of the porous membranes include a porous membrane made of a polyolefin resin and a porous membrane made of glass paper obtained by weaving glass fibers into a nonwoven fabric.

### [Exterior]

Exterior 107 is made of, for example, a material obtained by laminating a metal foil such as an aluminum foil with a resin film such as a polyethylene terephthalate (PET) film. Exterior 107 may be a container made of a resin or a metal.

In the above, the configuration example in which first electrode 101 is a negative electrode and second electrode 103 is a positive electrode has been described. However, first electrode 101 may be a positive electrode and second electrode 103 may be a negative electrode.

When first electrode 101 is a positive electrode and second electrode 103 is a negative electrode, active material layer 109 is a positive active material layer. More specifically, Bi contained in active material layer 109 functions as a positive active material. In this case, second electrode 103 that serves as a negative electrode is composed of, for example, lithium metal.

Battery 1000 including, as a basic configuration, first electrode 101, electrolyte solution 102, and second electrode 103, is sealed in a sealed container so as to keep air and moisture from being mixed therein. Examples of the shape of battery 1000 include a coin shape, a cylindrical shape, an angular shape, a sheet shape, a button shape, a flattened shape, and a laminated shape.

### EXAMPLES

Hereinafter, details of the present disclosure will be disclosed with reference to examples and reference examples. The following examples are considered by way of example, and the present disclosure is not limited to only the following examples.

### (Example 1)

### <Preparation of first electrode>

A nickel mesh (10 cm × 10 cm, thickness: 50 µm, "NI-318200" manufactured by The Nilaco Corporation) was subjected to preliminary degreasing with an organic solvent as a pretreatment, and then immersed in an acidic solvent to perform degreasing, thereby activating the surface of the nickel mesh. A bismuth methanesulfonate as a soluble bismuth salt was added to a 1.0 mol/L methanesulfonic acid so as to reach 0.18 mol/L Bi³⁺ ions, thereby preparing a plating bath. The activated nickel mesh was connected to a power source so as to allow a current to be applied to the nickel mesh, and then immersed in the plating bath. Thereafter, the current density was controlled to 2 A/dm², thereby electroplating the surface of the nickel mesh with Bi such that the thickness of Bi was about 1 µm. After the electroplating, the nickel mesh was recovered from the acidic bath, then washed with pure water, and dried.

Thereafter, the nickel mesh electroplated with Bi was heat-treated at 400°C for 60 hours in an electric furnace in an argon atmosphere. After the heat treatment, production of BiNi was confirmed by X-ray diffraction, and then the nickel mesh was cut into a size of 2 cm × 2 cm to obtain a first electrode. More specifically, the first electrode according to Example 1 had a configuration in which active material layer 109 made of BiNi was provided on base material 108 made of the nickel mesh. Obtained active material layer 109 made of BiNi was subjected to surface X-ray diffraction measurement. Fig. 3 is a graph showing an example of an X-ray diffraction pattern of the active material layer composed of the BiNi thin film prepared on the nickel mesh.

### <Preparation of test cell>

The first electrode was used as a working electrode. Li of 0.34 mm in thickness was used as a counter electrode. The working electrode corresponds to a negative electrode of a secondary battery. The Li metal was doubly coated with a microporous separator (Celgard 3401, Asahi Kasei Corporation). As an electrolyte solution, a solution in which LiPF₆ was dissolved in vinylene carbonate at a concentration of 1.0 mol/L was prepared. The thus-prepared working electrode, the counter electrode, and the electrolyte solution were used to assemble a battery as a test cell according to Example 1. the thus-prepared test cell is a monopolar test cell including a working electrode, and a counter electrode, and is used to test the performance of one of electrodes in a secondary battery. Specifically, an electrode to be tested is used as the working electrode, and an appropriate active material in a sufficient amount for covering the reaction of the working electrode is used as the counter electrode. The test cell was intended to test the performance of the first electrode as a negative electrode, and thus, largely excessive Li metal was used as the counter electrode as is usually used. The negative electrode that has performance tested with the use of such a test cell can be used as a secondary battery, for example, in combination with a positive electrode containing such a positive active material as described in the exemplary embodiment described above, for example, a transition metal oxide containing Li.

### <Charge-discharge test>

The test cell was subjected to a charge-discharge test. At a constant current value of 0.6 mA (0.15 mA/cm²), the test cell was charged to 0 V, and discharged to 2 V. The charging and discharging were defined as one cycle. The discharge cycle test was performed at 25°C.

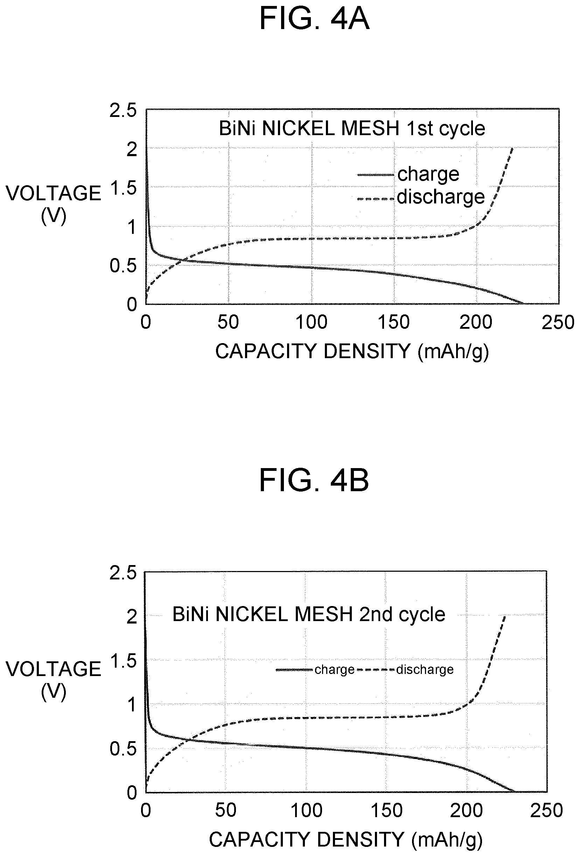

Fig. 4A is a graph showing the result of an initial charge-discharge test of the test cell according to Example 1. Fig. 4B is a graph showing the result of a second charge-discharge test of the test cell according to Example 1.

As can been seen from the result of the charge-discharge test of the test cell according to Example 1, the battery including the electrode containing the BiNi as an active material was excellent in discharge flatness. In addition, in the second charge-discharge, the same level of charge-discharge capacity as that in the initial charge-discharge capacity was obtained.

### <Charge-discharge cycle test>

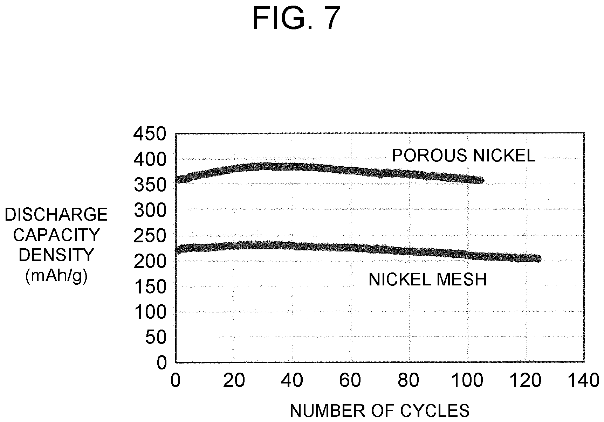

Under the same conditions as those in the charge-discharge test, the test cell was repeatedly charged and discharged with charging and discharging as one cycle, and cycle characteristics were evaluated. Fig. 7 is a graph showing a relationship between the number of cycles and the discharge capacity density for the test cell according to the example.

### (Example 2)

### <Preparation of first electrode>

Porous nickel (10 cm × 10 cm, thickness: 1.6 mm, "NI-318161" manufactured by The Nilaco Corporation) was subjected to preliminary degreasing with an organic solvent as a pretreatment, and then immersed in an acidic solvent to perform degreasing, thereby activating the surface of the porous nickel. A bismuth methanesulfonate as a soluble bismuth salt was added to a 1.0 mol/L methanesulfonic acid so as to reach 0.18 mol/L Bi³⁺ ions, thereby preparing a plating bath. The activated porous nickel was connected to a power source so as to allow a current to be applied to the nickel mesh, and then immersed in the plating bath. Thereafter, the current density was controlled to 2 A/dm², thereby electroplating the surface of the porous nickel with Bi such that the thickness of Bi was about 1 µm. After the electroplating, the porous nickel was recovered from the acidic bath, then washed with pure water, and dried.

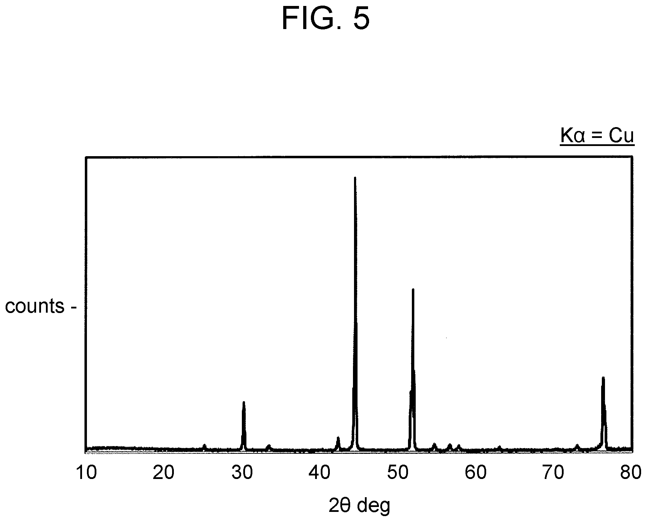

Thereafter, the nickel mesh electroplated with Bi was heat-treated at 400°C for 60 hours in an electric furnace in an argon atmosphere. After the heat treatment, production of BiNi was confirmed by X-ray diffraction, and then the nickel mesh was cut into a size of 2 cm × 2 cm to obtain a first electrode. In other words, the first electrode according to Example 2 had a configuration in which active material layer 109 made of BiNi was provided on base material 108 made of the nickel mesh. Obtained active material layer 109 made of BiNi was subjected to surface X-ray diffraction measurement. Fig. 5 is a graph showing an example of an X-ray diffraction pattern of the active material layer composed of the BiNi thin film prepared on the porous nickel.

### <Preparation of test cell>

The first electrode according to Example 2 was used as a working electrode. Except for this respect, a test cell was prepared in the same manner as in Example 1.

### <Charge-discharge test>

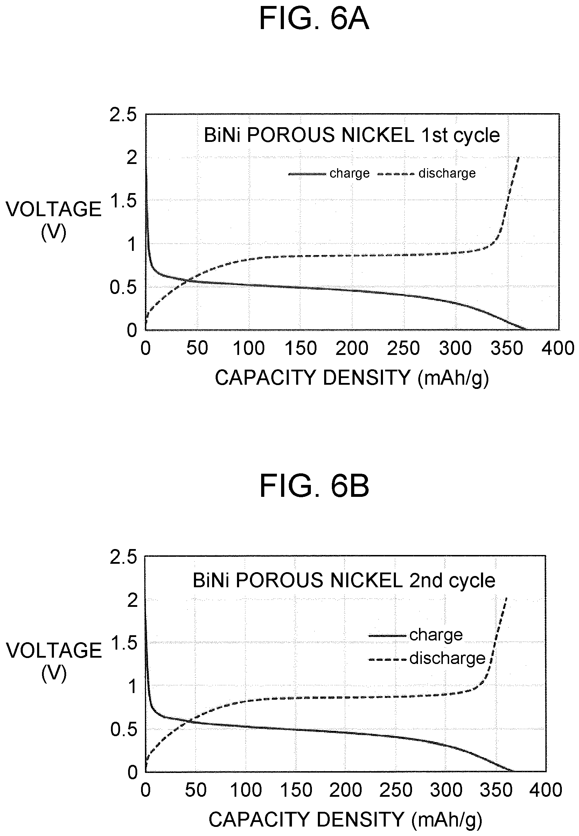

The test cell was subjected to a charge-discharge test. The charge-discharge test was performed in the same manner as in Example 1. Fig. 6A is a graph showing the result of an initial charge-discharge test of the test cell according to Example 2. Fig. 6B is a graph showing the result of a second charge-discharge test of the test cell according to Example 2. As can been seen from the result of the charge-discharge test of the test cell according to Example 2, the battery including the electrode containing the BiNi as an active material was excellent in discharge flatness. In addition, in the second charge-discharge, the same level of charge-discharge capacity as that in the initial charge-discharge capacity was obtained.

### <Charge-discharge cycle test>

The test cell was subjected to a charge-discharge cycle test. The discharge test was performed in the same manner as in Example 1. Fig. 7 is a graph showing a relationship between the number of cycles and the discharge capacity density for the test cell according to the example.

### (Reference Example 1)

### <Preparation of first electrode>

A copper foil was subjected to preliminary degreasing with an organic solvent as a pretreatment. Then, one side of the foil was masked, and the copper foil was immersed in an acidic solvent to perform degreasing, thereby activating the surface of the copper foil. A bismuth methanesulfonate as a soluble bismuth salt was added to a 1.0 mol/L methanesulfonic acid so as to reach 0.18 mol/L Bi³⁺ ions, thereby preparing a plating bath. The activated copper foil was connected to a power source so as to allow a current to be applied to the nickel mesh, and then immersed in the plating bath. Thereafter, the current density was controlled to 2 A/dm², thereby electroplating the unmasked part of the copper foil surface with Bi such that the thickness of Bi was about 1 µm. After electroplating, the copper foil was recovered from the acidic bath, and after removing the masking, washed with pure water, dried, and punched into a size of 2 cm × 2 cm to obtain a first electrode. In other words, the first electrode according to Reference Example 1 had a configuration in which an active material layer made of the Bi plating layer was provided on a current collector made of the copper foil.

### <Preparation of test cell>

The first electrode according to Reference Example 1 was used as a working electrode. Except for this respect, a test cell was prepared in the same manner as in Example 1.

### <Charge-discharge test>

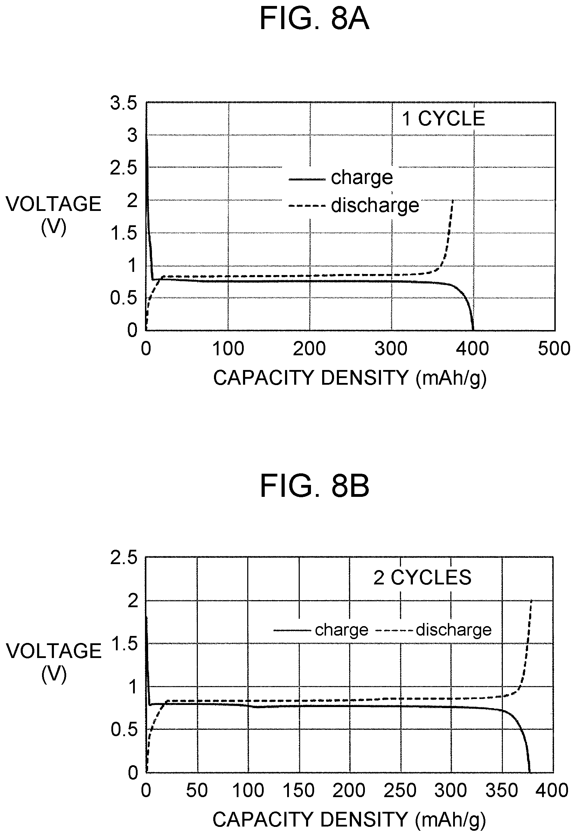

The test cell was subjected to a charge-discharge test. The charge-discharge test was performed in the same manner as in Example 1. Fig. 8A is a graph showing the result of an initial charge-discharge test of the test cell according to Reference Example 1. Fig. 8B is a graph showing the result of a second charge-discharge test of the test cell according to Reference Example 1. From Figs. 8A and 8B, the battery according to Reference Example 1 in which the Bi plating layer was used for the active material layer was excellent in discharge flatness, and furthermore, the charge-discharge capacity was substantially maintained even in the second charge-discharge.

### <Charge-discharge cycle test>

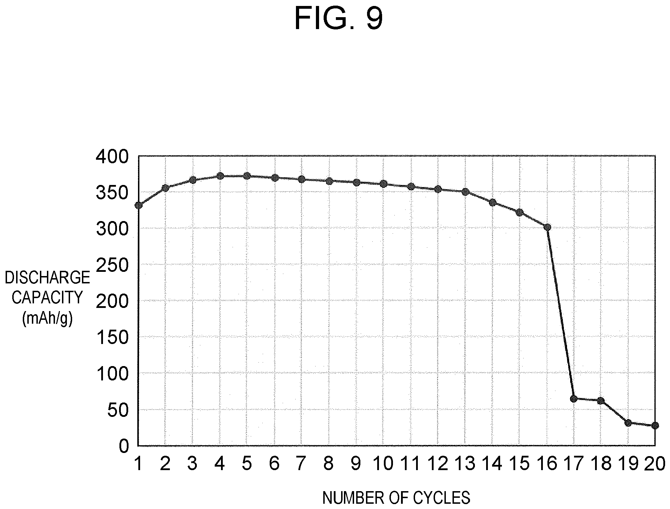

The test cell was subjected to a charge-discharge cycle test. The discharge test was performed in the same manner as in Example 1. Fig. 9 is a graph showing a relationship between the number of cycles and the discharge capacity density for the test cell according to Reference Example 1. By comparing the number of cycles shown in Fig. 9 with the number of cycles shown in Fig. 7 for the cell according to Example 1, it is found that the battery including the first electrode containing the BiNi as an active material has more excellent charge-discharge cycle characteristics than the battery including the first electrode containing the Bi as an active material.

### (Comparative Example 1)

### <Preparation of first electrode>

A Bi powder (fine powder of purity 3N, particle diameter: about 1 µm to 2 µm, manufactured by Kojundo Chemical Laboratory Co., Ltd.) and AB ("DENKA BLACK", manufactured by Denka Company Limited) as a conductive agent were dispersed in an NMP solution of PVdF to prepare a slurry. The PVdF was used as a binder. In this slurry, the ratios by mass of the Bi powder, AB, and PVdF were 8 : 1 : 1 (Bi powder : AB : PVdF). After this slurry was applied onto a copper foil (10 cm × 10 cm), the NMP as a solvent was removed, and the copper foil was molded and punched into 2 cm × 2 cm to obtain a first electrode.

### <Preparation of test cell>

A test cell was assembled in the same manner as in Example 1, except for using the first electrode prepared in Comparative Example 1.

### <Charge-discharge test>

The test cell was subjected to a charge-discharge test. At a constant current value of 0.6 mA (0.15 mA/cm²), the test cell was charged to 0 V, and discharged to 2 V. The charging and discharging were defined as one cycle. The charge-discharge cycle test was performed at 25°C.

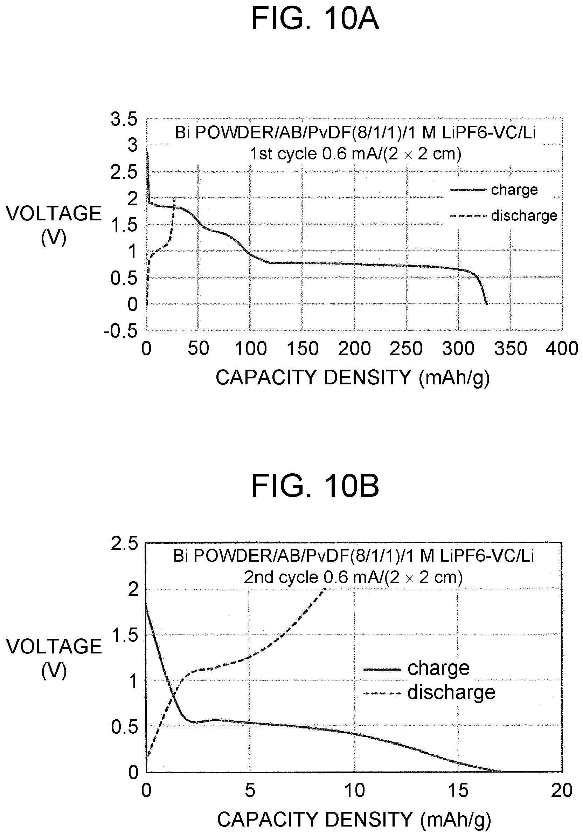

Fig. 10A is a graph showing the result of an initial charge-discharge test of the test cell according to Comparative Example 1. Fig. 10B is a graph showing the result of a second charge-discharge test of the test cell according to Comparative Example 1. From Figs. 10A and 10B, the battery according to Comparative Example 1 in which the Bi powder was used for the active material layer was very poor in terms of initial charge-discharge characteristics, and the second charge-discharge capacity was further decreased.

### <Charge-discharge cycle test>

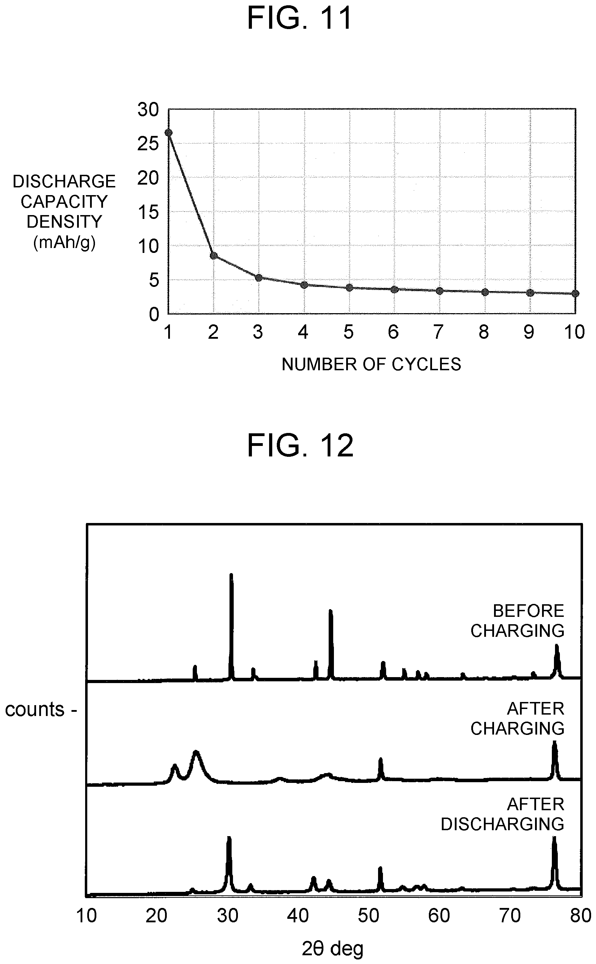

Under the same conditions as those in the charge-discharge test, the test cell was repeatedly charged and discharged with charging and discharging as one cycle, and cycle characteristics were evaluated. Fig. 11 is a graph showing a relationship between the number of cycles up to 10 cycles and the discharge capacity density of the test cell according to Comparative Example 1. As can be seen from the result shown in Fig. 11, the battery according to Comparative Example 1 in which the Bi powder was used for the active material layer was very poor in terms of cycle characteristics.

Further, surface X-ray diffraction measurement with the use of Cu-Kα rays was performed from the surface of the active material layer before and after charging with the use of the test cell according to Example 1. The X-ray diffraction patterns were measured by the Θ-2Θ method with the use of Cu-Kα rays of 1.5405 Å and 1.5444 Å in wavelength as X-rays, by use of an X-ray diffractometer (MiNi Flex, manufactured by Rigaku Corporation). Fig. 12 is a graph showing examples of X-ray diffraction patterns of the first electrode before the charging, after the charging, and after the discharging the test cell according to Example 1. According to the obtained X-ray diffraction patterns, before the charging, BiNi and Ni were be identified, and compounds derived from the active material and the base material were identified, respectively. After the charging, LiBi, Li₃Bi, and Ni were identified. In other words, LiBi and Li₃Bi have been found to be produced after the charging. Furthermore, after the discharging, BiNi and Ni were identified.

### INDUSTRIAL APPLICABILITY

The battery according to the present disclosure can be used as, for example, a lithium secondary battery.

### REFERENCE MARKS IN THE DRAWINGS

- 1000: battery
- 101: first electrode
- 102: electrolyte solution
- 103: second electrode
- 104: first current collector
- 105: second current collector
- 106: separator
- 107: exterior
- 108: base material
- 109: active material layer

## Claims

1. A battery comprising:
a first electrode;
a second electrode; and
an electrolyte solution,
wherein
the first electrode comprises:
a base material that is a porous body, and
an active material layer located on a surface of the base material, and the active material layer contains an alloy containing Bi and Ni.

2. The battery according to Claim 1, wherein
the active material layer contains BiNi.

3. The battery according to Claim 2, wherein
the BiNi has a crystal structure having a space group which belongs to C2/m.

4. The battery according to Claim 2 or 3, wherein
the active material layer contains the BiNi as a main component of an active material.

5. The battery according to any one of Claims 2 to 4, wherein
the active material layer contains substantially only the BiNi as an active material.

6. The battery according to any one of Claims 1 to 5, wherein
the active material layer contains at least one selected from the group consisting of LiBi and Li₃Bi.

7. The battery according to any one of Claims 1 to 6, wherein
the active material layer contains no solid electrolyte.

8. The battery according to any one of Claims 1 to 7, wherein
the base material contains Ni.

9. The battery according to any one of Claims 1 to 8, wherein
the active material layer is a heat-treated plating layer.

10. The battery according to any one of Claims 1 to 9, wherein
the electrolyte solution contains an aprotic solvent and a lithium salt dissolved in the aprotic solvent.

11. The battery according to Claim 10, wherein
the aprotic solvent contains a vinylene carbonate.

12. The battery according to any one of Claims 1 to 11, wherein
the first electrode is a negative electrode, and
the second electrode is a positive electrode.
